# EUROPEAN PATENT SPECIFICATION

(11) **EP 2 757 616 B1**
(45) Date of publication and mention of the grant of the patent: **25.10.2017**
(21) Application number: 13179617.9
(22) Date of filing: 07.08.2013
(51) Int. Cl.: H01M 4/131, H01M 4/36, H01M 4/485, H01M 4/505, H01M 4/525, H01M 4/58, H01M 4/587, H01M 4/583, H01M 4/62, H01M 10/0525

(54) **Positive electrode for rechargable lithium battery and rechargable lithium battery including the same**
Positive Elektrode für eine wiederaufladbare Lithiumbatterie und wiederaufladbare Lithiumbatterie damit
Électrode positive pour batterie au lithium rechargeable et batterie au lithium rechargeable la comprenant

(30) Priority: 16.01.2013 US 201361753336 P; 01.07.2013 US 201313932463
(43) Date of publication of application: 23.07.2014
(73) Proprietor: Samsung SDI Co., Ltd., Gyeonggi-do (KR)
(72) Inventor: Han, Jeong-Woo, Yongin-si (Gyeonggi-do) (KR); Kim, Young-Kee, Yongin-si (Gyeonggi-do) (KR); Park, Sun-Il, Yongin-si (Gyeonggi-do) (KR); Ishida, Sumihito, Yongin-si (Gyeonggi-do) (KR)
(74) Representative: Santarelli

(56) References cited:
- EP-A1- 1 391 950
- EP-A1- 1 903 627
- EP-A1- 2 429 020
- EP-A2- 2 418 719
- EP-A2- 2 492 996
- WO-A1-2013/052494
- US-A- 5 885 544
- US-A1- 2002 127 473
- US-A1- 2004 120 882
- NORLIDA KAMARULZAMAN ET AL: "Influence of Carbon Additives on Cathode Materials, LiCoO2 and LiMn2O4", ADVANCED MATERIALS RESEARCH, TRANS TECH PUBLICATIONS LTD, CH , vol. 545 1 July 2012 (2012-07-01), pages 214-219, XP009168915, ISSN: 1022-6680, DOI: 10.4028/www.scientific.net/AMR.545.214 Retrieved from the Internet: URL:https://www.scientific.net/AMR.545.214 [retrieved on 2015-05-01]

## Description

### BACKGROUND

### 1. Field

This disclosure relates to a positive electrode for rechargeable lithium battery and a rechargeable lithium battery including the same.

### 2. Description of the Related Art

Lithium rechargeable battery uses intercalation and deintercalation reactions of lithium ions when battery is charged and discharged. Lithium rechargeable battery basically includes a positive electrode comprising positive active material, a negative electrode comprising negative active material, a separator, and an electrolyte solution.

Meanwhile, ISG (Idle Stop & Go or Integrated Starter & Generator) system will be a widely used system before the electric vehicles are commercially used, the commercial needs for which the experts are expecting exceeds more than 10 billion dollars by the year of 2015.

The conventional lead storage battery that has been studied for use in the ISG system of a vehicle, however, is very large in volume considering the capacity, and has disadvantage that the life becomes shorter and shorter as the charge and discharge continues.

In order to solve these problems, attention has been drawn to the use of lithium rechargeable batteries. The conventional lithium rechargeable batteries, however, have low rate and short life, as they generate electricity by using oxidation/reduction reactions. This phenomenon limits their use in the applications requiring high input and output powers, such as the ISG system.

In order to obtain high input and output powers, low resistance design using thin electrodes has been developed. The lithium rechargeable batteries, however, present limitations with respect to their material properties, and with the reduction of their capacity, even though a high rate is developed.

EP2418719 A2 discloses a positive electrode for a lithium battery comprising a lithium composite oxide, a conducting agent and a transition metal oxide.

### SUMMARY

The invention provides a positive electrode for a rechargeable lithium battery that has improved capacity, cycle-life, and high rate charge/discharge properties.

The invention also provides a rechargeable lithium battery including the positive electrode according to the invention disclosed below. The object of the invention is a positive electrode for a lithium rechargeable battery including a current collector; a positive active material layer disposed on the current collector, wherein the positive active material layer includes a positive active material, conductive material, active carbon, and an additive, wherein said positive active material comprises a lithium metal oxide, and wherein said additive comprises manganese oxide, cobalt oxide, iron oxide, vanadium oxide, or a combination thereof. The additive preferably consists in manganese oxide, cobalt oxide, iron oxide, vanadium oxide, or a combination thereof.

In one embodiment, the manganese oxide, cobalt oxide, iron oxide, vanadium oxide, or the combination thereof, is preferably Mn₃O₄, CO₃O₄, V₂O₅, Fe₃O₄, or a combination thereof.

The lithium metal oxide may comprise lithium cobalt oxide, lithium nickel cobalt manganese oxide, lithium nickel cobalt aluminum oxide, lithium iron phosphate, lithium nickel phosphate, lithium cobalt phosphate or a combination thereof.

The active carbon may be in the form of particles having an average diameter of 1 to 30µm. The average diameter is preferably of 3 to 20 µm, more preferably of 5 to 10 µm.

The average diameter may be measured using a solution including particles dispersed therein and a laser. For example, the average diameter may be measured using a refraction angle of laser by the particles dispersed in the solution. The average diameter may be average value of size of the dispersed particles.

The additive may be in the form of particles having an average diameter of 0.01 to 20 µm, preferably of 0.03 to 1 µm.

In a preferred embodiment, the manganese oxide comprises Mn₃O₄, the cobalt oxide comprises Co₃O₄, the iron oxide comprises Fe₃O₄, and the vanadium oxide comprises V₂O₅.

The positive active material layer may comprise 65 to 90 wt %, preferably 70 to 85 wt % of said positive active material, 1 to 30 wt %, preferably 3 to 25 wt % of said active carbon, and 0.05 to 3 wt % of said additive, based on the total weight of the positive active material layer. According to the invention, the active carbon and the additive are comprised in a weight ratio of 1:0.05 to 1:0.23.

The positive active material layer may further comprise a binder.

The positive active material layer is usually made of the positive active material that is to say 100% of the positive active material layer is made of the positive active material.

Another of the objects of the invention is a lithium rechargeable battery including the positive electrode according to the invention as described above; a negative electrode including a negative active material; a separator disposed between the positive and negative electrodes; and an electrolyte impregnating the separator and the positive and negative electrodes.

The negative active material may include amorphous carbon.

Other embodiments of the invention are detailed in the below description.

A lithium rechargeable battery having advantageously improved capacity, cycle-life, and high rate charge/discharge properties is provided according to the invention.

### BRIEF DESCRIPTION OF THE DRAWINGS

FIG. 1 is an exploded perspective view showing a rechargeable lithium battery according to one embodiment of the invention.
Fig. 2 is a graph showing the capacity characteristics of the lithium rechargeable batteries of Example 1.
Fig. 3 is a graph showing the high-rate charge characteristics (voltage u in V with respect to the capacity in Ah) of the lithium rechargeable batteries of Examples 1 to 3, and of Comparative Example 1.
Fig. 4 is a graph showing the high-rate discharge characteristics (voltage u in V with respect to the capacity in Ah) of the lithium rechargeable batteries of Examples 1 to 3, and of Comparative Example 1.
Fig. 5 is a graph showing the cycle-life characteristics (capacity charge at 1C after 30,000 cycles) of the lithium rechargeable batteries of Examples 1 to 3, and of Comparative Example 1.

### DETAILED DESCRIPTION

Exemplary embodiments of the present disclosure will hereinafter be described in detail.

The positive electrode for a lithium rechargeable battery according to the invention includes a current collector; and a positive active material layer disposed on the current collector, wherein the positive active material layer includes a positive active material, active carbon, and an additive.

The positive active material comprises a lithium metal oxide.

The additive comprises, preferably consists in, manganese oxide, cobalt oxide, iron oxide, vanadium oxide, or a combination thereof, preferably Mn₃O₄, Co₃O₄, Fe₃O₄, V₂O₅, or a combination thereof.

The current collector may be Al but is not limited thereto.

The lithium metal oxide may comprise, preferably may be, lithium cobalt oxide, lithium nickel cobalt manganese oxide, lithium nickel cobalt aluminium oxide, lithium phosphoric acid iron oxide, lithium phosphoric acid nickel oxide, lithium phosphoric acid cobalt oxide, or a combination thereof.

The positive active material may include a composite metal oxide including, in addition to lithium, at least one selected from the group consisting of cobalt, manganese, and nickel. In particular, the following lithium metal oxide compounds may be used:
LiₐA'_{1-b}R'''_{b}D₂ (wherein, in the above Chemical Formula, 0.90 ≤ a ≤ 1.8 and 0 ≤ b ≤ 0.5); LiₐE_{1-b}R'''_{b}O_{2-c}D_{c} (wherein, in the above Chemical Formula, 0.90 ≤ a ≤ 1.8, 0 ≤ b ≤ 0.5 and 0 ≤ c ≤ 0.05); LiE_{2-b}R'''_{b}O_{4-c}D_{c} (wherein, in the above Chemical Formula, 0 ≤ b ≤ 0.5, 0 ≤ c ≤ 0.05); LiₐNi_{1-b-c}Co_{b}R'''_{c}D_{α} (wherein, in the above Chemical Formula, 0.90 ≤ a ≤ 1.8, 0 ≤ b ≤ 0.5, 0 ≤ c ≤ 0.05 and 0 < α ≤ 2); LiₐNi_{1-b-c}Co_{b}R'''_{c}O_{2-α}Z_{α} (wherein, in the above Chemical Formula, 0.90 ≤ a ≤ 1.8, 0 ≤ b ≤ 0.5, 0 ≤ c ≤ 0.05 and 0 < α <2); LiₐNi_{1-b-c}Co_{b}R'''_{c}O_{2-α}Z₂ (wherein, in the above Chemical Formula, 0.90 ≤ a ≤ 1.8, 0 ≤ b ≤ 0.5, 0 ≤ c ≤ 0.05 and 0 < α < 2); LiₐNi_{1-b-c}Mn_{b}R'''_{c}D_{α} (wherein, in the above Chemical Formula, 0.90 ≤ a ≤ 1.8, 0 ≤ b ≤ 0.5, 0 ≤ c ≤ 0.05 and 0 < a ≤ 2); LiₐNi_{1-b-c}Mn_{b}R'''_{c}O_{2-α}Z_{α} (wherein, in the above Chemical Formula, 0.90 ≤ a ≤ 1.8, 0 ≤ b ≤ 0.5, 0 ≤ c ≤ 0.05 and 0 < α < 2); LiₐNi_{1-b-c}Mn_{b}R'''_{c}O_{2-α}Z₂ (wherein, in the above Chemical Formula, 0.90 ≤ a ≤ 1.8, 0 ≤ b ≤ 0.5, 0 ≤ c ≤ 0.05 and 0 < α < 2); LiₐNi_{b}E_{c}G_{d}O₂ (wherein, in the above Chemical Formula, 0.90 ≤ a ≤ 1.8, 0 ≤ b ≤ 0.9, 0 ≤ c ≤ 0.5 and 0.001 ≤ d ≤ 0.1); LiₐNi_{b}Co_{c}Mn_{d}GeO₂ (wherein, in the above Chemical Formula, 0.90 ≤ a ≤ 1.8, 0 ≤ b ≤ 0.9, 0 ≤ c ≤ 0.5, 0 ≤ d ≤0.5 and 0.001 ≤ e ≤ 0.1); LiₐNiG_{b}O₂ (wherein, in the above Chemical Formula, 0.90 ≤ a ≤ 1.8 and 0.001 ≤ b ≤ 0.1); LiₐCoG_{b}O₂ (wherein, in the above Chemical Formula, 0.90 ≤ a ≤ 1.8 and 0.001 ≤ b ≤ 0.1); LiₐMnG_{b}O₂ (wherein, in the above Chemical Formula, 0.90 ≤ a ≤ 1.8 and 0.001 ≤ b ≤ 0.1); LiₐMn₂G_{b}O₄ (wherein, in the above Chemical Formula, 0.90 ≤ a ≤ 1.8 and 0.001 ≤ b ≤ 0.1); QO₂; QS₂; LiQS₂; V₂O₅; LiV₂O₅; LiTO₂; LiNiVO₄; Li_{(3-f)}J₂(PO₄)₃ (0 ≤ f ≤ 2); Li_{(3-f)}Fe₂(PO₄)₃ (0 ≤ f ≤ 2); and LiFePO₄.

In the above chemical formulae, A' is Ni, Co, Mn, or a combination thereof; R''' is Al, Ni, Co, Mn, Cr, Fe, Mg, Sr, V, a rare earth element, or a combination thereof; D is O, F, S, P, or a combination thereof; E is Co, Mn, or a combination thereof; Z is F, S, P, or a combination thereof; G is Al, Cr, Mn, Fe, Mg, La, Ce, Sr, V, or a combination thereof; Q is Ti, Mo, Mn, or a combination thereof; T is Cr, V, Fe, Sc, Y, or a combination thereof; and J is V, Cr, Mn, Co, Ni, Cu, or a combination thereof.

The lithium metal oxide may have a coating layer on its surface or may be mixed with a compound having a coating layer on its surface. The coating layer may include at least one coating element compound selected from the group consisting of an oxide of a coating element, a hydroxide of a coating element, an oxyhydroxide of a coating element, an oxycarbonate of a coating element, and a hydroxyl carbonate of a coating element. The coating element compound can be amorphous or crystalline. The coating element compound may include Mg, Al, Co, K, Na, Ca, Si, Ti, V, Sn, Ge, Ga, B, As, Zr, or a mixture thereof. The coating layer is usually formed by a method having no negative influence on the properties of the positive active material. For example, the method may include any coating method such as spray coating, dipping, and the like but is not illustrated in more detail, since well-known to those who work in the related field.

The positive active material layer may comprise 65 wt. % to 90 wt %, preferably 70 wt % to 85 wt %, of the positive active material, based on the total weight of the positive active material layer. Within this range, the lithium rechargeable battery may have advantageously improved capacity, improved cycle-life, and improved high-rate charge/discharge properties.The active carbon may advantageously improve the high-rate charge/discharge properties of the lithium rechargeable battery by the means of an improved physical reaction (to chemical reaction) in the ions' absorption and dissociation.The active carbon may be in the form of particles having an average diameter of 1 to 30 µm, preferably 3 to 20 µm, more preferably 5 to 10 µm. Within these ranges, it is believed that the active carbon has similar average diameter to that of the positive active material, thus the dispersity of the active carbon may be good.

The active carbon may be comprised in an amount of 1 to 30 wt %, specifically 3 to 25 wt %, based on the total weight of the positive active material. Within these ranges, the lithium rechargeable battery including the active carbon may have improved capacity, cycle-life, and high charge/discharge rate.

The manganese oxide may comprise Mn₃O₄, the cobalt based oxide may comprise Co₃O₄, the iron based oxide may comprise Fe₃O₄, and the vanadium based oxide may comprise V₂O₅.

Preferably, the manganese oxide Mn₃O₄ may be used.

The manganese oxide Mn₃O₄ has spinel structures, and the number of the peripheral electrons of Mn may change from 2⁺ to 3⁺. When using according to the invention a transition metal, such as, Co, Fe, V, and the like, as well as Mn, which is in a stable oxide form in the positive electrode, the lithium rechargeable battery shows advantageously improved capacity as the lithium ion concentration on the surface of the electrode increases. It is believed this is due to the fact that the anions are absorbed onto the surfaces of the additives.

It is believed that the active carbon facilitates lithium ions' physical absorption to the surfaces of the additives, thereby fast delivery of the lithium ions to the positive active material. It is believed that the additive increases the lithium ions' dispersion on the surface through reduction reaction, thereby enhancing the properties of the active carbon, as well as providing electron's passage.

Therefore, the positive electrode according to the invention reduces internal resistance and increases conductivity to achieve high rate charge/discharge properties.

The active carbon and the additive are included in a weight ratio of 1:0.05 to 1:0.23. It is believed that, within this range, the lithium rechargeable battery may have improved capacity, cycle-life, and high rate charge/discharge properties.

The additive may be in the form of particles having an averagediameter of 0.01 to 20 µm, preferably 0.1 to 1 µm, more preferably 0.03 to 1 µm. It is believed that, within this range, the additive has good dispersibility with the positive electrode active material and the active carbon.

The active carbon may be in the form of particles being an average diameter of particles of 1 to 30 µm, preferably 3 to 20 µm, more preferably 5 to 10 µm.

The additive may be included in an amount of 0.05 to 3 wt % based on the total weight of the positive active material. It is believed that, within this range, the lithium rechargeable battery may have improved capacity, cycle-life, and high rate charge/discharge properties.

The active carbon may be included in an amount of 1 to 30 wt %, preferably 3 to 25 wt %, based on the total weight of the positive active material.

The positive active material layer may include at least one binder. It is believed that the binder improves binding properties of the positive active material particles to one another and to a current collector. Examples of the binder include polyvinyl alcohol, carboxyl methylcellulose, hydroxypropylcellulose, diacetylcellulose, polyvinylchloride, carboxylated polyvinylchloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is generally used to provide conductivity to an electrode. The conductive material may also include any electronic conductive material as long as causing no chemical change. For example, the conductive material can include at least one mixture of a conductive material such as natural graphite, artificial graphite, carbon black, acetylene black, ketjen black, a carbon fiber, a metal powder, a metal fiber or the like such as copper, nickel, aluminum, silver or the like, or a polyphenylene derivative or the like.

The binder may be included in an amount of 2 to 10 wt %, preferably 3 to 7 wt %, based on the total weight of the positive active material. The conductive material may be included in an amount of 1 to 8 wt %, specifically 2 to 5 wt %, based on the total weight of the positive active material.

All the features of the positive electrode disclosed above can be combined.

The positive electrode may be fabricated by coating a composition of a positive active material as a layer on the surface of a current collector to form a positive active material layer, and drying and pressing said coating.

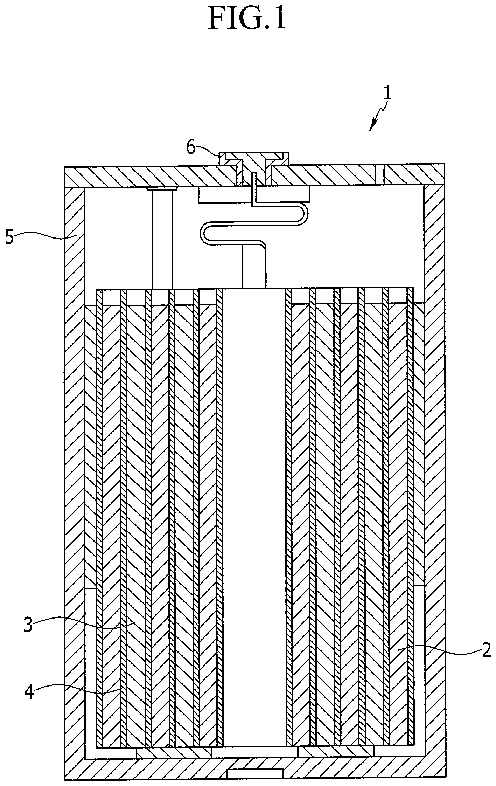

Hereinafter, the lithium rechargeable battery including the above positive electrode is described in detail, referring to FIG. 1.

Referring to FIG. 1, the rechargeable lithium battery 1 includes an electrode assembly including a positive electrode 2, a negative electrode 3, and a separator 4 between the positive electrode 2 and the negative electrode 3, a battery case 5 for housing the electrode assembly, an electrolyte injected in the case from the top, and a cap plate 6 sealing the battery case 5.

Details of the positive electrode are the same as described above.

The negative electrode for a rechargeable lithium battery includes a current collector and a negative active material layer formed on the current collector, and the negative active material layer includes a negative active material.

The current collector may be a copper foil, a nickel foil, a stainless steel foil, a titanium foil, nickel foam, a copper foam, a polymer substrate coated with a conductive metal, or a combination thereof.

The negative active material layer may include negative electrode active material, a binder, and optionally a conductive material.

The negative active material may include a material that reversibly intercalates/deintercalates lithium ions, lithium metal, a lithium metal alloy, a material being capable of doping/dedoping lithium, or a transition metal oxide.

The material that reversibly intercalates/deintercalates lithium ions may be a carbon material. The carbon material may be any generally-used carbon-based negative active material in a lithium ion rechargeable battery. Examples of the carbon material include crystalline carbon, amorphous carbon, and a combination thereof. The crystalline carbon may be non-shaped, or sheet, flake, spherical, or fiber shaped natural graphite or artificial graphite. The amorphous carbon may be a soft carbon, a hard carbon, a mesophase pitch carbonized product, fired coke, and the like.

The lithium metal alloy includes lithium and a metal of Na, K, Rb, Cs, Fr, Be, Mg, Ca, Sr, Si, Sb, Pb, In, Zn, Ba, Ra, Ge, Al, or Sn.

Examples of the material being capable of doping/dedoping lithium include Si, a Si-C composite, SiOₓ (0 < x < 2), a Si-Y alloy (wherein Y is an alkali metal, an alkaline-earth metal, 1 Group 13 to 16 elements, a transition element, a rare earth element, or a combination thereof, and not Si), Sn, SnO₂, a Sn-C composite, Sn-Y (wherein Y is an alkali metal, an alkaline-earth metal, Group 13 to 16 elements, a transition element, a rare earth element, or a combination thereof, and not Sn), and the like. Y may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

The transition metal oxide may be vanadium oxide, lithium vanadium oxide, and the like.

The negative active material may preferably include said amorphous carbon, specifically an amorphous carbon sintered at between 400°C to 1500°C. By using amorphous carbon as a negative electrode material, the lithium rechargeable battery may have improved high rate charge/discharge property.

The binder improves binding properties of negative active material particles with one another and with a current collector. Examples of the binder include polyvinyl alcohol, carboxyl methylcellulose, hydroxypropylcellulose, polyvinylchloride, carboxylated polyvinylchloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material is included to improve electrode conductivity. Any electrically conductive material may be used as a conductive material unless it causes a chemical change. Examples of the conductive material include a carbon-based material such as natural graphite, artificial graphite, carbon black, acetylene black, ketjen black, a carbon fiber, and the like; a metal-based material of metal powder or metal fiber including copper, nickel, aluminum, silver, and the like; a conductive polymer such as polyphenylene derivatives; or a mixture thereof.

The negative and electrode may be fabricated in a method of mixing the active material, a conductive material, and a binder in a solvent to prepare a negative active material composition and coating the composition on a current collector. The electrode manufacturing method is well known and thus, is not described in detail in the present specification. The solvent includes N-methylpyrrolidone and the like but is not limited thereto.

The electrolyte includes a non-aqueous organic solvent and a lithium salt. The non-aqueous organic solvent serves as a medium for transmitting ions taking part in the electrochemical reaction of the battery. The non-aqueous organic solvent may include a carbonate-based, ester-based, ether-based, ketone-based, alcohol-based, or aprotic solvent.

Examples of the carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like.

When the carbonate-based solvent is prepared by mixing a cyclic carbonate and a linear carbonate, the solvent has advantages of high permittivity and low viscosity. The cyclic carbonate and the linear carbonate are mixed together in a volume ratio of 1:1 to 1:9.

Examples of the ester-based solvent may include methyl acetate, ethyl acetate, n-propyl acetate, dimethylethyl acetate, methylpropionate, ethylpropionate, γ-butyrolactone, decanolide, valerolactone, mevalonolactone, caprolactone, and the like. Examples of the ether-based solvent include dibutyl ether, tetraglyme, diglyme, dimethoxyethane, 2-methyltetrahydrofuran, tetrahydrofuran, and examples of the ketone-based solvent include cyclohexanone, and the like. Examples of the alcohol-based solvent include ethyl alcohol, isopropyl alcohol, and the like.

The non-aqueous organic solvent may be used singularly or in a mixture. When the organic solvent is used in a mixture, the mixing ratio can be controlled in accordance with a desirable battery performance.

The non-aqueous electrolyte may further include an overcharge inhibitor, such as, ethylene carbonate, pyrocarbonate, and the like.

Lithium salt is dissolved in an organic solvent to be used as a lithium ion source in a lithium rechargeable battery, thus making the battery operate and promoting the lithium ion's delivery between positive and negative electrodes.

Examples of the lithium salt include LiPF₆, LiBF₄, LiSbF₆, LiAsF₆, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (wherein, x and y are natural numbers), LiCl, Lil, LiB(C₂O₄)₂(lithium bis(oxalato) borate; LiBOB), and a combination thereof.

The concentration of the lithium ion salt in the lithium rechargeable battery may be between about 0.1 M and 2.0 M. It is believed that within these ranges, the electrolyte may have proper viscosity and good conductivity to exhibit good electrolyte properties, and the lithium ions may effectively move in the lithium rechargeable battery.

The separator may be any material used in the art to which the invention pertains, as long as it can separate the positive and the negative electrodes and provide a passage through which the lithium ions can transfer.Thus the separator isgenerally a material which is low resistive to the ion's movement of the electrolyte and has a good moisture containing property. For example, glass fiber, polyester, polyethylene, polypropylene, poly tetrafluoro ethylene (PTFE), or a combination thereof may be selected as a separator. The separator may be in a woven or nonwoven form. For example, a polyethylene based separator, such as, polyethylene, polypropylene, and the like, is usually selected in a lithium rechargeable battery. In order to increase the heat-resistibility or mechanical strength, a separator coated with a ceramic component or a polymer material may be used, which may also be fabricated in a monolayer or a multilayers.

The following examples illustrate the present invention in more detail. These examples, however, should not in any sense be interpreted as limiting the scope of the present invention.

### Examples

In all the examples according to the invention below (examples 1 to 12) the amount of four of the five components of the positive active material layer (LiCoO₂, active carbon, carbon black and polyvinylidene fluoride) is expressed in weight % (wt %) based on the total weight of positive active layer material, and the total amount of these four components is 100%. The amount of the fifth component of the positive active material layer, that is to say Mn₃O₄, is expressed in parts by weight based on 100 parts by weight of active carbon, and is considered as part of the amount of active carbon.

### Example 1

85 wt % of LiCoO₂ (average diameter of 5 µm), 5 wt % of active carbon (YP, average diameter of 7µm), 7 parts by weight of Mn₃O₄ (average diameter of 0.3µm) as an additive, based on 100 parts by weight of the active carbon (which makes (5 * 0.07 =) 0.35 wt % of the positive active material layer), 4 wt % of carbon black, and 6 wt % of polyvinylidene fluoride (PVdF) are mixed and dispersed in N-methyl-2-pyrrolidone to prepare a positive active material composition. The active carbon and the additive (Mn₃O₄ have a weight ratio of 1:0.07.

90 wt % of soft carbon and 10 wt % of polyvinylidene fluoride (PVdF) are mixed and dispersed in N-methyl-2-pyrrolidone to prepare a negative active material composition. The negative active material composition is coated as a layer on a cupper foil, dried, and pressed to form a negative electrode.

After interposing a polyethylene separator between the positive and negative electrodes, an electrolyte made of a solvent mixed with ethylene carbonate (EC), ethyl methyl carbonate (EMC), and dimethyl carbonate (DMC) (mixed in ratio of 2:2:6 in volume) and containing 1M LiPF₆ is injected to fabricate a lithium rechargeable battery.

### Example 2

A lithium rechargeable battery is fabricated in the same method as in Example 1, except that 85 wt % of LiCoO₂ (average diameter of 5 µm), 5 wt % of active carbon (YP, average diameter of 7µm), 14 parts by weight of Mn₃O₄ (average diameter of 0.3µm) as an additive, based on 100 parts by weight of the active carbon (which makes (5 * 0.14 =) 0.7 wt % of the positive active material layer), 4 wt % of carbon black, and 6 wt % of polyvinylidene fluoride (PVdF) are mixed and dispersed in N-methyl-2-pyrrolidone to prepare a positive active material composition. The active carbon and the additive (Mn₃O₄ have a weight ratio of 1:0.14.

### Example 3

A lithium rechargeable battery is fabricated in the same method as in Example 1, except that 85 wt % of LiCoO₂ (average diameter of 5 µm), 5 wt % of active carbon (YP, average diameter of 7µm), 21 parts by weight of Mn₃O₄ (average diameter of 0.3µm) based on 100 parts by weight of the active carbon (which makes (5 * 0.21 =) 1.05 wt % of the positive active material layer), 4 wt % of carbon black, and 6 wt % of polyvinylidene fluoride (PVdF) are mixed and dispersed in N-methyl-2-pyrrolidone to prepare a positive active material composition. The active carbon and the additive (Mn₃O₄ have a weight ratio of 1:0.21 (21 % by weight).

### Example 4

A lithium rechargeable battery is fabricated in the same method as in Example 1, except that 85 wt % of LiCoO₂ (average diameter of 5 µm), 5 wt % of active carbon (YP, average diameter of 7µm), 7 parts by weight of Co₃O₄ (average diameter of 0.3µm) as an additive, based on 100 parts by weight of the active carbon, 4 wt % of carbon black, and 6 wt % of polyvinylidene fluoride (PVdF) are mixed and dispersed in N-methyl-2-pyrrolidone to prepare a positive active material composition. The active carbon and the additive (Co₃O₄) have a weight ratio of 1:0.07.

### Example 5

A lithium rechargeable battery is fabricated in the same method as in Example 1, except that 85 wt % of LiCoO₂ (average diameter of 5 µm), 5 wt % of active carbon (YP, average diameter of 7µm), 14 parts by weight of Co₃O₄ (average diameter of 0.3µm), as an additive, based on 100 parts by weight of the active carbon, 4 wt % of carbon black, and 6 wt % of polyvinylidene fluoride (PVdF) are mixed and dispersed in N-methyl-2-pyrrolidone to prepare a positive active material composition. The active carbon and the additive (Co₃O₄) have a weight ratio of 1:0.14.

### Example 6

A lithium rechargeable battery is fabricated in the same method as in Example 1, except that 85 wt % of LiCoO₂ (average diameter of 5 µm), 5 wt % of active carbon (YP, average diameter of 7µm), 21 parts by weight of Co₃O₄ (average diameter of 0.3µm), as an additive, based on 100 parts by weight of the active carbon, 4 wt % of carbon black, and 6 wt % of polyvinylidene fluoride (PVdF) are mixed and dispersed in N-methyl-2-pyrrolidone to prepare a positive active material composition. The active carbon and the additive (Co₃O₄) have a weight ratio of 1:0.21.

### Example 7

A lithium rechargeable battery is fabricated in the same method as in Example 1, except that 85 wt % of LiCoO₂ (average diameter of 5 µm), 5 wt % of active carbon (YP, average diameter of 7µm), 7 parts by weight of Fe₃O₄ (average diameter of 0.3µm), as an additive, based on 100 parts by weight of the active carbon, 4 wt % of carbon black, and 6 wt % of polyvinylidene fluoride (PVdF) are mixed and dispersed in N-methyl-2-pyrrolidone to prepare a positive active material composition. The active carbon and the additive (Fe₃O₄) have a weight ratio of 1:0.07.

### Example 8

A lithium rechargeable battery is fabricated in the same method as in Example 1, except that 85 wt % of LiCoO₂ (average diameter of 5 µm), 5 wt % of active carbon (YP, average diameter of 7µm), 14 parts by weight of Fe₃O₄ (average diameter of 0.3µm), as an additive, based on 100 parts by weight of the active carbon, 4 wt % of carbon black, and 6 wt % of polyvinylidene fluoride (PVdF) are mixed and dispersed in N-methyl-2-pyrrolidone to prepare a positive active material composition. The active carbon and the additive (Fe₃O₄) have a weight ratio of 1:0.14.

### Example 9

A lithium rechargeable battery is fabricated in the same method as in Example 1, except that 85 wt % of LiCoO₂ (average diameter of 5 µm), 5 wt % of active carbon (YP, average diameter of 7µm), 21 parts by weight of Fe₃O₄ (average diameter of 0.3µm), as an additive, based on 100 parts by weight of the active carbon, 4 wt % of carbon black, and 6 wt % of polyvinylidene fluoride (PVdF) are mixed and dispersed in N-methyl-2-pyrrolidone to prepare a positive active material composition. The active carbon and the additive (Fe₃O₄) have a weight ratio of 1:0.21.

### Example 10

A lithium rechargeable battery is fabricated in the same method as in Example 1, except that 85 wt % of LiCoO₂ (average diameter of 5 µm), 5 wt % of active carbon (YP, average diameter of 7µm), 7 parts by weight of V₂O₅ (average diameter of 0.3µm), as an additive, based on 100 parts by weight of the active carbon, 4 wt % of carbon black, and 6 wt % of polyvinylidene fluoride (PVdF) are mixed and dispersed in N-methyl-2-pyrrolidone to prepare a positive active material composition. The active carbon and the additive (V₂O₅) have a weight ratio of 1:0.07.

### Example 11

A lithium rechargeable battery is fabricated in the same method as in Example 1, except that 85 wt % of LiCoO₂ (average diameter of 5 µm), 5 wt % of active carbon (YP, average diameter of 7µm), 14 parts by weight of V₂O₅ (average diameter of 0.3µm), as an additive, based on 100 parts by weight of the active carbon, 4 wt % of carbon black, and 6 wt % of polyvinylidene fluoride (PVdF) are mixed and dispersed in N-methyl-2-pyrrolidone to prepare a positive active material composition. The active carbon and the additive (V₂O₅) have a weight ratio of 1:0.14.

### Example 12

A lithium rechargeable battery is fabricated in the same method as in Example 1, except that 85 wt % of LiCoO₂ (average diameter of 5 µm), 5 wt % of active carbon (YP, average diameter of 7µm), 21 parts by weight of V₂O₅ (average diameter of 0.3µm), as an additive, based on 100 parts by weight of the active carbon, 4 wt % of carbon black, and 6 wt % of polyvinylidene fluoride (PVdF) are mixed and dispersed in N-methyl-2-pyrrolidone to prepare a positive active material composition. The active carbon and the additive (V₂O₅) have a weight ratio of 1:0.21.

### Comparative Example 1

A lithium rechargeable battery is fabricated in the same method as in Example 1, except that 85 wt % of LiCoO₂ (average diameter of 5 µm), 5 wt % of active carbon (YP, average diameter of 7µm), 4 wt % of carbon black, and 6
wt % of polyvinylidene fluoride (PVdF) are mixed and dispersed in N-methyl-2-pyrrolidone to prepare a positive active material composition.

### Comparative Example 2

A lithium rechargeable battery is fabricated in the same method as in Example 1, except that 85 wt % of LiNi_{1/3}Co_{1/3}Mn_{1/3}O₂, 5 wt % of active carbon (average diameter of 7µm), 4 wt % of carbon black, and 6 wt % of polyvinylidene fluoride (PVdF) are mixed and dispersed in N-methyl-2-pyrrolidone to prepare a positive active material composition.

### Comparative Example 3

A lithium rechargeable battery is fabricated in the same method as in Example 1, except that 85 wt % of LiFePO₄, 5 wt % of active carbon (average diameter of 7µm), 4 wt % of carbon black, and 6 wt % of polyvinylidene fluoride (PVdF) are mixed and dispersed in N-methyl-2-pyrrolidone to prepare a positive active material composition.

### Experiment Example 1: Capacity characteristic evaluation

Constant current at 1C is charged to each lithium rechargeable battery fabricated according to Examples 1 to 12 and Comparative Examples 1 to 3, and it is terminated when the voltage of the battery reaches at 4.2V, and the capacity is measured when the batteries are discharged at 50C current to 2.0V. The results are described in Tables 1 and 2.

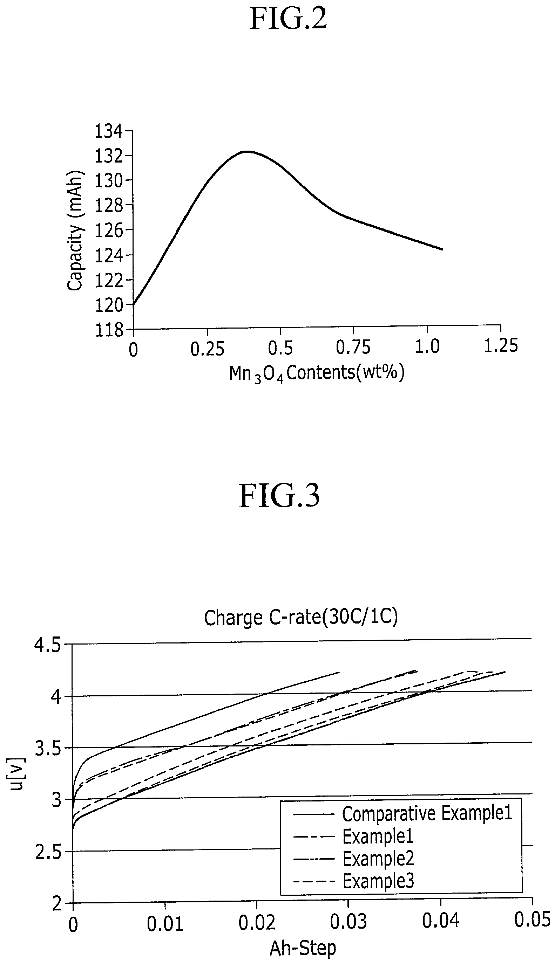

FIG. 2 is a graph showing the capacity characteristics of the lithium rechargeable batteries according to Example 1.

### Experimental Example 2: High rate charge/discharge characteristics evaluation

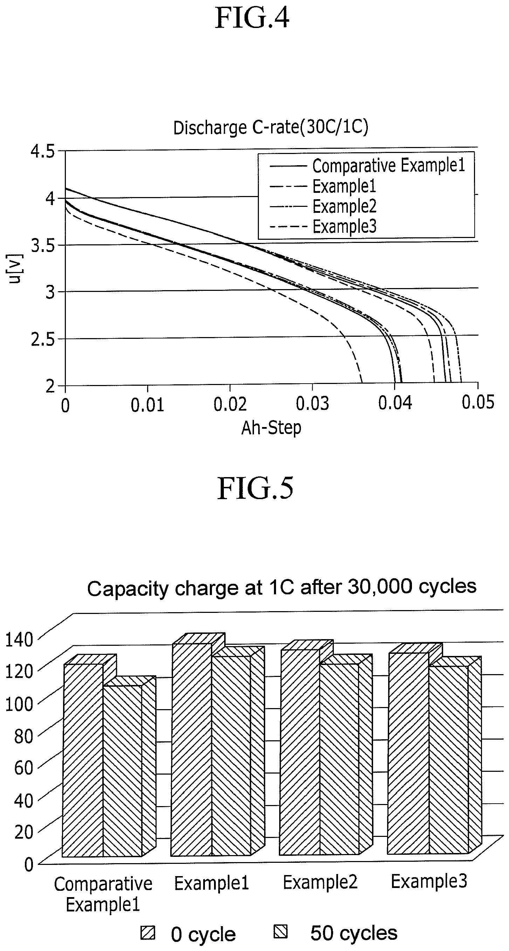

Lithium rechargeable battery fabricated according to Examples 1 to 12 and Comparative Examples 1 to 3 are charged and discharged in the same conditions as in Experimental Example 1, and the capacity retention (%) of 30C/1C is measured. The results are shown in Table 1, and FIGS. 3 and 4.

FIG. 3 is a graph showing the high-rate charge characteristics (voltage u in V with respect to the capacity in Ah) of the lithium rechargeable batteries according to Examples 1 to 3, and to Comparative Example 1. FIG. 4 is a graph showing the high-rate discharge characteristics (voltage u in V with respect to the capacity in Ah) of the lithium rechargeable batteries according to Examples 1 to 3, and to Comparative Example 1.

The capacity retention (%) of 30C/1C is obtained from the percentage of the discharge capacity at 1C to the discharge capacity at 30C.

### Experimental Example 3: Cycle-life characteristics evaluation

Lithium rechargeable battery fabricated according to Examples 1 to 12 and Comparative Examples 1 to 3 are charged and discharged for 1000 cycles in the same conditions as in Experimental Example 1, and the capacity retention (%) of 1000^{th}/1^{th} cycle is measured. The results are shown in Table 1, and FIG. 5.

FIG. 5 is a graph showing the cycle-life characteristics (capacity charge at 1C after 30,000 cycles) of the lithium rechargeable batteries according to Examples 1 to 3, and to Comparative Example 1.

The capacity retention (%) of 1000^{th}/1^{th} is obtained from the percentage of the discharge capacity at the 1^{st} cycle to the discharge capacity at the 1000^{th} cycle.

**[Table 1]**

| | Capacity(mAh) | Capacity retention (%) of 30C/1C | Capacity retention (%) of 1000^{th}/1^{th} cycle |
|---|---|---|---|
| Example 1 | 132 | 86 | 93 |
| Example 2 | 127.2 | 87 | 93 |
| Example 3 | 124.2 | 87 | 94 |
| Example 4 | 128 | 86 | 93 |
| Example 5 | 122.3 | 87 | 93 |
| Example 6 | 115.2 | 87 | 93 |
| Example 7 | 122.5 | 86 | 93 |
| Example 8 | 116.4 | 87 | 92 |
| Example 9 | 110.1 | 87 | 92 |
| Example 10 | 127.6 | 86 | 93 |
| Example 11 | 120.5 | 87 | 93 |
| Example 12 | 113.7 | 87 | 93 |
| Comp Example 1 | 120 | 81 | 88 |
| Comp Example 2 | 128 | 83 | 89 |
| Comp Example 3 | 115 | 79 | 78 |

From the results of Table 1, and FIGS. 3 to 5, the lithium rechargeable batteries comprising a positive active material, active carbon, and an additive according to Examples 1 to 12 have improved capacity, high rate charge/discharge, and cycle-life characteristics compared to those that do not include the additives according to Comparative Examples 1 to 3.

**<Description of Symbols>**

| | |
|---|---|
| 1: rechargeable lithium battery, | 2: positive electrode |
| 3: negative electrode, | 4: separator |
| 5: battery case, | 6: sealing cap plate |

## Claims

1. A positive electrode for a rechargeable lithium battery, including
a current collector, and
a positive active material layer disposed on the current collector,
wherein the positive active material layer comprises a positive active material, conductive material and an additive, wherein said positive active material comprises a lithium metal oxide, and said additive comprises, preferably consists in, manganese oxide, cobalt oxide, iron oxide, vanadium oxide, or a combination thereof, preferably Mn₃O₄, Co₃O₄, V₂O₅, Fe₃O₄, or a combination thereof,
**characterised in that** the positive active material layer further comprises active carbon and the active carbon and the additive are comprised in a weight ratio of 1:0.05 to 1:0.23.

2. A positive electrode according to claim 1, wherein the lithium metal oxide comprises lithium cobalt oxide, lithium nickel cobalt manganese oxide, lithium nickel cobalt aluminium oxide, lithium iron phosphate, lithium nickel phosphate, lithium cobalt phosphate, or a combination thereof.

3. A positive electrode according to any one of claims 1 and 2, wherein the active carbon is in the form of particles having an average diameter of 1 to 30 µm, preferably of 3 to 20 µm, more preferably 5 to 10 µm.

4. A positive electrode according to any one of claims 1 to 3, wherein the additive is in the form of particles having an average diameter of 0.01 to 20 µm, preferably of 0.03 to 1 µm.

5. A positive electrode according to any one of claims 1 to 4, wherein the manganese oxide comprises Mn₃O₄, the cobalt oxide comprises Co₃O₄, the iron oxide comprises Fe₃O₄, and the vanadium oxide comprises V₂O₅.

6. A positive electrode according to any one of claims 1 to 5, wherein the positive active material layer comprises 65 to 90 wt %, preferably 70 to 85 wt % of the positive active material, 1 to 30 wt %, preferably 3 to 25 wt % of active carbon, and 0.05 to 3 wt % of the additive, based on the total weight of the positive active material layer.

7. A positive electrode according to any one of claims 1 to 6, wherein the positive active material layer further comprises a binder.

8. A rechargeable lithium battery which includes a positive electrode according to any one of claims 1 to 7, a negative electrode including a negative active material, a separator interposed between the negative electrode and the positive electrode, and an electrolyte impregnating the separator and the positive and negative electrodes.

9. A rechargeable lithium battery according to claim 8, wherein the negative active material comprises amorphous carbon.

## Patentansprüche

1. Positive Elektrode für eine wiederaufladbare Lithiumbatterie, enthaltend
einen Stromabnehmer und
eine positive Aktivmaterialschicht, die auf dem Stromabnehmer angeordnet ist,
wobei die positive Aktivmaterialschicht ein positives Aktivmaterial, leitfähiges Material und einen Zusatzstoff umfasst,
wobei das positive Aktivmaterial ein Lithium-Metalloxid umfasst und der Zusatzstoff Manganoxid, Kobaltoxid, Eisenoxid, Vanadiumoxid oder eine Kombination derselben, vorzugsweise Mn₃O₄, Co₃O₄, V₂O₅, Fe₃O₄ oder eine Kombination derselben, umfasst, vorzugsweise daraus besteht,
**dadurch gekennzeichnet, dass** die positive Aktivmaterialschicht ferner Aktivkohle umfasst und die Aktivkohle und der Zusatzstoff in einem Gewichtsverhältnis von 1:0,05 bis 1:0,23 enthalten sind.

2. Positive Elektrode nach Anspruch 1, wobei das Lithium-Metalloxid Lithium-Kobalt-Oxid, Lithium-Nickel-Kobalt-Mangan-Oxid, Lithium-Nickel-Kobalt-AluminiumOxid, Lithiumeisenphosphat, Lithiumnickelphosphat, LithiumKobaltphosphat oder eine Kombination derselben umfasst.

3. Positive Elektrode nach einem der Ansprüche 1 und 2, wobei die Aktivkohle in der Form von Partikeln mit einem mittleren Durchmesser von 1 bis 30 µm, vorzugsweise von 3 bis 20 µm, noch bevorzugter von 5 bis 10 µm vorliegt.

4. Positive Elektrode nach einem der Ansprüche 1 bis 3, wobei der Zusatzstoff in der Form von Partikeln mit einem mittleren Durchmesser von 0,01 bis 20 µm, vorzugsweise von 0,03 bis 1 µm vorliegt.

5. Positive Elektrode nach einem der Ansprüche 1 bis 4, wobei das Manganoxid Mn₃O₄ umfasst, das Kobaltoxid Co₃O₄ umfasst, das Eisenoxid Fe₃O₄ umfasst und das Vanadiumoxid V₂O₅ umfasst.

6. Positive Elektrode nach einem der Ansprüche 1 bis 5, wobei die positive Aktivmaterialschicht, ausgehend vom Gesamtgewicht der positiven Aktivmaterialschicht, 65 bis 90 Gew.%, vorzugsweise 70 bis 85 Gew.%, des positiven Aktivmaterials, 1 bis 30 Gew.%, vorzugsweise 3 bis 25 Gew.%, der Aktivkohle und 0,05 bis 3 Gew.% des Zusatzstoffs umfasst.

7. Positive Elektrode nach einem der Ansprüche 1 bis 6, wobei die positive Aktivmaterialschicht ferner ein Bindemittel umfasst.

8. Wiederaufladbare Lithiumbatterie, enthaltend eine positive Elektrode nach einem der Ansprüche 1 bis 7, eine negative Elektrode, die ein negatives Aktivmaterial enthält, einen zwischen der negativen Elektrode und der positiven Elektrode angeordneten Separator und einen Elektrolyten, mit dem der Separator und die positive und die negative Elektrode getränkt sind.

9. Wiederaufladbare Lithiumbatterie nach Anspruch 8, wobei das negative Aktivmaterial amorphen Kohlenstoff umfasst.

## Revendications

1. Electrode positive pour une batterie au lithium rechargeable, comprenant :
un collecteur de courant, et
une couche de matériau actif positif disposée sur le collecteur de courant,
dans laquelle la couche de matériau actif positif comprend un matériau actif positif, un matériau conducteur et un additif,
dans laquelle ledit matériau actif positif comprend un oxyde métallique de lithium, et ledit additif comprend, de préférence consiste en, un oxyde de manganèse, un oxyde de cobalt, un oxyde de fer, un oxyde de vanadium, ou une combinaison de ceux-ci, de préférence Mn₃O₄, Co₃O₄, V₂O₅, Fe₃O₄, ou une combinaison de ceux-ci,
**caractérisée en ce que** la couche de matériau actif positif comprend en outre du charbon actif et le charbon actif et l'additif sont compris dans un rapport de poids de 1:0,05 à 1:0,23.

2. Electrode positive selon la revendication 1, dans laquelle l'oxyde métallique de lithium comprend un oxyde de cobalt-lithium, un oxyde de manganèse-cobalt-nickel-lithium, un oxyde d'aluminium-cobalt-nickel-lithium, un phosphate de fer-lithium, un phosphate de nickel-lithium, un phosphate de cobalt-lithium, ou une combinaison de ceux-ci.

3. Electrode positive selon l'une quelconque des revendications 1 et 2, dans laquelle le charbon actif est sous la forme de particules ayant un diamètre moyen de 1 à 30 µm, de préférence de 3 à 20 µm, de façon encore plus préférée de 5 à 10 µm.

4. Electrode positive selon l'une quelconque des revendications 1 à 3, dans laquelle l'additif est sous la forme de particules ayant un diamètre moyen de 0,01 à 20 µm, de préférence de 0,03 à 1 µm.

5. Electrode positive selon l'une quelconque des revendications 1 à 4, dans laquelle l'oxyde de manganèse comprend du Mn₃O₄, l'oxyde de cobalt comprend du Co₃O₄, l'oxyde de fer comprend du Fe₃O₄, et l'oxyde de vanadium comprend du V₂O₅.

6. Electrode positive selon l'une quelconque des revendications 1 à 5, dans laquelle la couche de matériau actif positif comprend 65 à 90 % en poids, de préférence 70 à 85 % en poids, du matériau actif positif, 1 à 30 % en poids, de préférence 3 à 25 % en poids, de charbon actif, et 0,05 à 3 % en poids de l'additif, sur la base du poids total de la couche de matériau actif positif.

7. Electrode positive selon l'une quelconque des revendications 1 à 6, dans laquelle la couche de matériau actif positif comprend en outre un liant.

8. Batterie au lithium rechargeable qui comprend une électrode positive selon l'une quelconque des revendications 1 à 7, une électrode négative comprenant un matériau actif négatif, un séparateur interposé entre l'électrode négative et l'électrode positive, et un électrolyte imprégnant le séparateur et les électrodes positive et négative.

9. Batterie au lithium rechargeable selon la revendication 8, dans laquelle le matériau actif négatif comprend du carbone amorphe.
